# EUROPÄISCHE PATENTSCHRIFT

(11) **EP 2 604 456 B1**
(45) Veröffentlichungstag und Bekanntmachung des Hinweises auf die Patenterteilung: **25.12.2013**
(21) Anmeldenummer: 12196034.8
(22) Anmeldetag: 07.12.2012
(51) Int. Cl.: B60H 1/34

(54) **Luftausströmer**
Air vent
Dispositif d'écoulement d'air

(30) Priorität: 12.12.2011 DE 102011120915
(43) Veröffentlichungstag der Anmeldung: 19.06.2013
(73) Patentinhaber: TRW Automotive Electronics & Components GmbH, 78315 Radolfzell (DE)
(72) Erfinder: Demerath, Michael, 66909 Hüffler (DE)
(74) Vertreter: Prinz & Partner

(56) Entgegenhaltungen:
- DE-A1- 10 225 811
- JP-A- 60 045 424
- JP-A- 2011 112 313

## Beschreibung

Die Erfindung betrifft einen Luftausströmer mit einem Gehäuse, das eine Ausströmöffnung aufweist, und mit mehreren Lamellen, die der Ausströmöffnung des Gehäuses zugeordnet und schwenkbar gelagert sind, wobei die Lamellen miteinander gekoppelt sind.

Ein solcher Luftausströmer wird insbesondere bei der Klimatisierung des Innenraums eines Kraftfahrzeugs verwendet. Durch den Luftausströmer strömt die Luft, die von der Heizungs-/Klimaanlage bereitgestellt wird, in den Innenraum des Fahrzeugs ein. Mit den schwenkbaren Lamellen kann dabei die Richtung des Luftstroms eingestellt werden. Sind die Lamellen beispielsweise waagrecht angeordnet, kann durch Schwenken der Lamellen eingestellt werden, ob der Luftstrom beispielsweise vom Armaturenbrett schräg nach oben in den Fahrzeuginnenraum eintritt, eher waagrecht oder schräg nach unten. Zusätzlich zu den Lamellen, die der Ausströmöffnung des Gehäuses zugeordnet und damit für einen Fahrzeuginsassen sichtbar sind, sind bei den meisten Ausströmern im Inneren des Gehäuses weitere Leitelemente vorgesehen, deren Schwenkachsen senkrecht zu den Schwenkachsen der Lamellen stehen. Mit diesen kann die Richtung des Luftstroms in einer zweiten Richtung eingestellt werden, beim obigen Beispiel nach links, mittig oder nach rechts. Ein solcher Luftausströmer ist beispielsweise in der DE 102 25 811 A1 gezeigt.

Die Aufgabe der Erfindung besteht darin, einen Luftausströmer zu schaffen, der eine sehr langgestreckte Ausströmöffnung aufweist, bei dem also die Länge der Ausströmöffnung und dadurch auch die Länge der Lamellen sehr viel größer ist als die Höhe der Ausströmöffnung, während gleichzeitig ein optisch ansprechendes Design möglich ist und eine ausreichende Belastbarkeit der Lamellen gewährleistet ist.

Zur Lösung dieser Aufgabe sind erfindungsgemäß mindestens drei Koppelelemente vorgesehen, welche die Lamellen miteinander koppeln und entlang den Lamellen im Abstand voneinander und im Abstand von der Vorderkante der Lamellen angeordnet sind. Die Erfindung beruht auf dem Grundgedanken, die Lamellen miteinander zu koppeln, und zwar nicht nur, wie dies im Stand der Technik meist üblich ist, an einem oder an beiden Enden der Lamellen, sondern an mehreren Stellen entlang der Länge der Lamellen. Auf diese Weise ergibt sich ein Verbund von Lamellen, der punktuell auf eine Lamelle wirkende Belastungen insgesamt aufnimmt. Wird beispielsweise eine einzige der Lamellen mittig mit einer Kraft belastet, die senkrecht zur von der Lamelle definierten Ebene wirkt, beispielsweise durch einen Finger eines Fahrzeuginsassen, wirkt einer Durchbiegung der Lamelle nicht nur die Biegesteifigkeit der belasteten Lamelle entgegen, sondern zusätzlich die Biegesteifigkeit aller anderen Lamellen, die über die Koppelelemente mit der belasteten Lamelle verbunden sind. Auf diese Weise können sehr lange Lamellen verwendet werden, die im Hinblick auf die Optik und auf aerodynamische Anforderungen nicht dicker ausgeführt sein müssen als die bisher bekannten Lamellen, aber dennoch insgesamt eine vergleichsweise hohe Belastbarkeit haben. Des Weiteren ist vorgesehen, dass die Lamellen eine Schwenkachse aufweisen, die in der Nähe ihrer Vorderkanten angeordnet ist, und dass die Koppelelemente im Abstand von der Schwenkachse mit den Lamellen verbunden sind. Bei dieser Ausgestaltung führen die Vorderkanten der Lamellen, wenn diese verschwenkt werden, keine Aufwärts- oder Abwärtsbewegung aus, sondern werden lediglich gedreht. Zudem ist ein Verbindungselement vorgesehen, das schwenkbar am Gehäuse gelagert ist und mit dem die Koppelelemente verbunden sind. Das Verbindungselement, das möglichst drehsteif ausgeführt ist, koppelt die Koppelelemente untereinander, so dass eine punktuell auf eine Lamelle wirkende Belastung von den Koppelelementen gleichmäßig, aufgenommen wird.

Gemäß einer Ausgestaltung der Erfindung sind mindestens vier Koppelelemente vorgesehen. Dies ermöglicht, die Koppelelemente in einem vergleichsweise kleinen Abstand voneinander anzuordnen, beispielsweise an den beiden Enden aller Lamellen sowie beiderseits der Mitte.

Vorzugsweise ist vorgesehen, dass die Lamellen auf der von der Innenseite des Gehäuses abgewandten Seite eine durchgehenden Vorderkante aufweisen. Eine durchgehende Vorderkante der Lamellen ist insbesondere im Hinblick auf die Optik wünschenswert.

Gemäß einer Ausführungsform ist dabei vorgesehen, dass die Koppelelemente nur mit den Lamellen gekoppelt sind. Diese Ausgestaltung zeichnet sich durch einen einfachen Aufbau aus, da keinerlei Maßnahmen notwendig sind, um die Koppelelemente mit anderen Bauteilen zu verbinden.

Vorzugsweise ist dabei vorgesehen, dass das Verbindungselement mittels mehrerer Gehäuselager am Gehäuse gelagert ist und dass die Gehäuselager in der Nähe der Verbindung der Koppelelemente mit dem Verbindungselement angeordnet sind. Bei dieser Ausgestaltung sind die Koppelelemente über das Verbindungselement am Gehäuse abgestützt, sodass einer unerwünschten Durchbiegung der Lamellen entgegengewirkt wird.

Gemäß einer Ausgestaltung der Erfindung ist vorgesehen, dass das Verbindungselement außerhalb der Ausströmöffnung angeordnet ist. In diesem Fall muss bei der Ausgestaltung des Verbindungselements keine Rücksicht auf die Strömungsverhältnisse genommen werden, sodass das Verbindungselement auch mit einem größeren Querschnitt ausgeführt werden kann, was für die Steifigkeit vorteilhaft ist.

Vorzugsweise ist vorgesehen, dass das Verbindungselement in derselben Ebene wie die Lamellen angeordnet ist. Dies ermöglicht, die Koppelelemente geradlinig auszuführen, so dass sie nur auf Zug und Druck belastet werden. Dadurch können die Koppelelemente sehr schlank ausgestaltet sein.

Gemäß einer Ausführungsform ist vorgesehen, dass das Verbindungselement innerhalb des Gehäuses angeordnet ist. Bei dieser Ausführungsform muss außerhalb des Gehäuses kein zusätzlicher Platz zur Aufnahme des Verbindungselements vorgesehen werden.

Gemäß einer Ausführungsform ist vorgesehen, dass die Koppelelemente mit dem Verbindungselement auf dessen von der Ausströmöffnung abgewandten Seite gekoppelt sind. Bei dieser Ausführungsform schwenkt das Verbindungselement in derselben Richtung wie die Lamellen, sodass das Verbindungselement als Zusatzlamelle wirkt.

Gemäß einer alternativen Ausgestaltung ist vorgesehen, dass die Koppelelemente mit dem Verbindungselement auf dessen der Ausströmöffnung zugewandten Seite gekoppelt sind. Dadurch verbleibt der von den Lamellen abgewandte Rand des Koppelelements, wenn die Lamellen geschwenkt werden, auf demselben Niveau, so dass dort kein Bauraum zur Aufnahme der Schwenkbewegung des Koppelelements notwendig ist.

Vorzugsweise ist dabei vorgesehen, dass das Verbindungselement mit einer der Lamellen durch einen Ansatz an den Koppelelementen verbunden ist. Auf diese Weise ergibt sich insgesamt eine besonders steife Ausgestaltung.

Gemäß einer Ausgestaltung der Erfindung ist vorgesehen, dass die Lamellen eine Länge von mehr als 150 mm haben, insbesondere von mehr als 200 mm und besonders bevorzugt mehr als 250 mm. Dies stellt einen sehr großen Fortschritt gegenüber herkömmlichen Luftausströmern dar, bei denen die Lamellen von üblicherweise unter 100 mm haben.

Die Erfindung wird nachfolgend anhand verschiedener Ausführungsformen beschrieben, die in den beigefügten Zeichnungen dargestellt sind. In diesen zeigen:
- Figur 1 eine aus mehreren erfindungsgemäßen Luftausströmern gebildete Luftausströmereinheit in einer perspektivischen Ansicht;
- Figur 2 die Luftausströmereinheit von Figur 1 eingebaut in ein Armaturenbrett.
- Figur 3 in einer schematischen Schnittansicht einen Luftausströmer gemäß einer ersten, nicht zur Erfindung gehörenden Ausführungsform der Erfindung;
- Figur 4 den Luftausströmer von Figur 3 in einer perspektivischen Ansicht;
- Figur 5 in einer schematischen Schnittansicht einen Luftausströmer gemäß einer zweiten, nicht zur Erfindung gehörenden Ausführungsform der Erfindung;
- Figur 6 den Luftausströmer von Figur 5 in einer perspektivischen Ansicht;
- Figur 7 in einer schematischen Schnittansicht einen Luftausströmer gemäß einer ersten Ausführungsform der Erfindung;
- Figur 8 den Luftausströmer von Figur 7 in einer perspektivischen Ansicht;
- Figur 9 in einer schematischen Schnittansicht einen Luftausströmer gemäß einer zweiten Ausführungsform der Erfindung;
- Figur 10 den Luftausströmer von Figur 9 in einer perspektivischen Ansicht;
- Figur 11 in einer schematischen Schnittansicht einen Luftausströmer gemäß einer dritten Ausführungsform der Erfindung; und
- Figur 12 den Luftausströmer von Figur 11 in einer perspektivischen Ansicht.

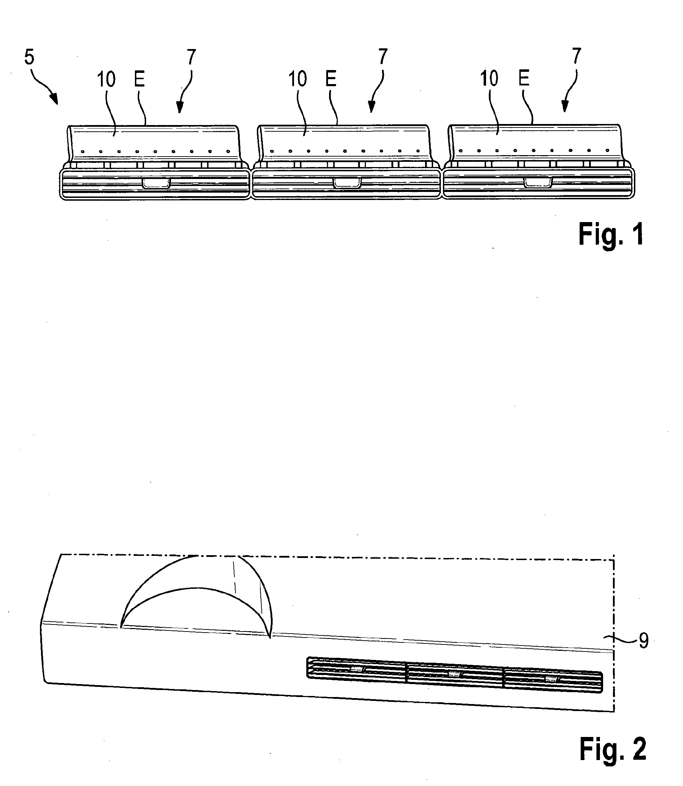

In Figur 1 ist eine Luftausströmereinheit 5 gezeigt, die aus mehreren unmittelbar nebeneinander angeordneten Luftausströmern 7 gebildet ist. Jeder Luftausströmer hat eine Breite von über 250 mm und eine Höhe in der Größenordnung von 60 mm. Die Luftausströmer sind also im Vergleich mit bekannten Luftausströmern sehr langgestreckt ausgestaltet. Die Luftausströmereinheit 5 kann in ein Armaturenbrett 9 (siehe Figur 2) eingebaut werden, sodass ein sehr breiter Luftausströmbereich gebildet ist, der hier eine Breite von 800 mm hat.

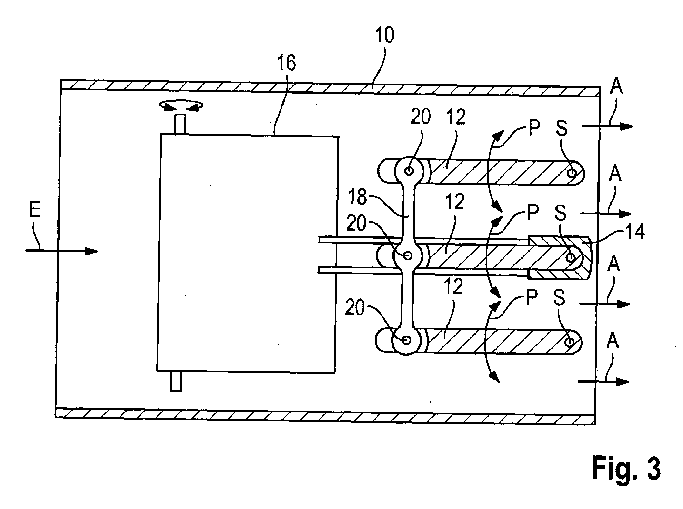

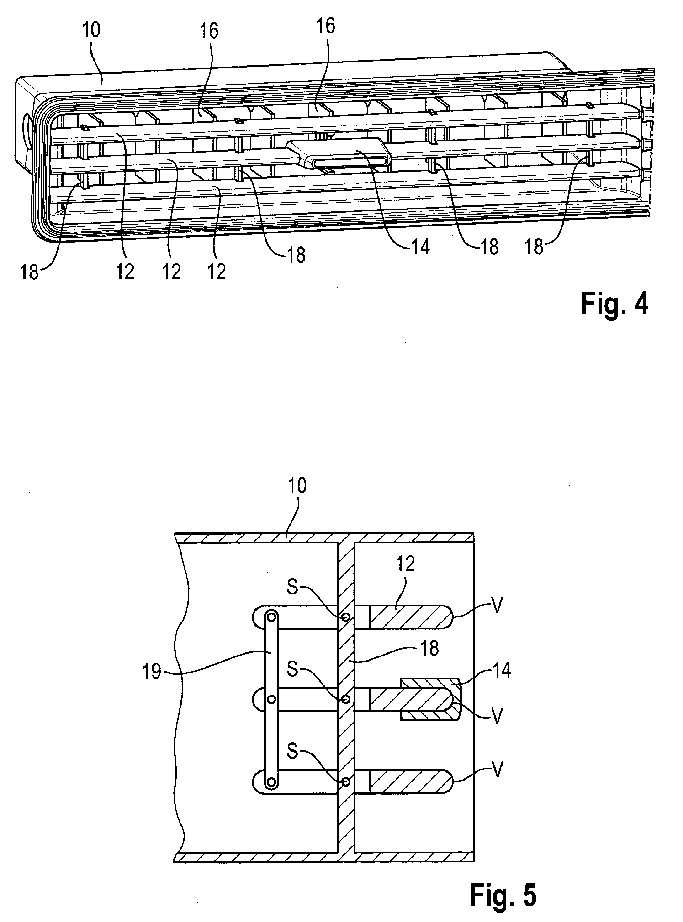

Jeder Luftausströmer weist ein Gehäuse 10 auf (siehe auch die Figuren 3 und 4), das eine Einströmöffnung E und eine Ausströmöffnung A aufweist. Die Einströmöffnung steht mit einer Heizungs-/Klimaanlage eines Kraftfahrzeugs in Verbindung, und durch die Ausströmöffnung strömt die Luft in den Innenraum des Fahrzeugs ein.

Im Gehäuse 10 sind mehrere Lamellen 12 angeordnet, die um eine Schwenkachse S schwenkbar im Gehäuse gelagert sind. Bei der in den Figuren 3 und 4 gezeigten ersten, nicht zur Erfindung gehörenden Ausführungsform ist die Schwenkachse S in der Nähe der Vorderkanten V der Lamellen angeordnet, also an dem Rand, der auf der Seite der Ausströmöffnung A liegt. Bei den Vorderkanten V der Lamellen 12 handelt es sich um den Rand der Lamellen, der vom Fahrzeuginnenraum aus sichtbar ist. Um die Lamellen um die Schwenkachsen S in der Richtung der Pfeile P zu verstellen, ist ein Bedienelement 14 vorgesehen, mit dem die Lamellen geschwenkt werden können. Das Bedienelement 14 wirkt auch mit mehreren Leitelementen 16 zusammen, die ebenfalls schwenkbar im Gehäuse angebracht sind. Die Schwenkachse der Leitelemente 16 ist dabei senkrecht zur Schwenkachse S der Lamellen 12. Die Leitelemente 16 liegen, vom Fahrzeuginnenraum betrachtet, hinter den Lamellen 12, also näher an der Einströmöffnung E.

Die Lamellen 12 sind miteinander durch mehrere Koppelelemente 18 verbunden, die mit jeder Lamelle 12 durch ein Schwenkgelenk 20 drehbar verbunden sind. Die Schwenkgelenke 20 können beispielsweise gebildet sein durch Zapfen, die an den Lamellen 12 angeordnet sind und in Öffnungen im Koppelelement 18 eingreifen. Die Schwenkgelenke 20 sind im Abstand von den Schwenkachsen S der Lamellen 12 angeordnet, beispielsweise im hinteren Drittel der Lamelle oder sogar am hinteren Rand. Dadurch wird eine durchgehende, ununterbrochene Vorderkante V über die gesamte Breite der Lamellen erhalten, da die Einschnitte zur Aufnahme der Koppelelemente 18 nicht bis zur Vorderkante reichen müssen.

Die Koppelelemente 18 dienen zum einen dazu, die Schwenkbewegung der Lamelle, die mit dem Bedienelement 14 verbunden ist, auf die anderen Lamellen zu übertragen. Hierfür wäre aber, wie dies im Stand der Technik der Fall ist, ein einziges Koppelelement notwendig. Es sind jedoch mehrere Koppelelemente im Abstand voneinander entlang den Lamellen 12 angeordnet. Bei der gezeigten Ausführungsform werden vier Koppelelemente verwendet. Die Aufgabe der Koppelelemente besteht darin, die Lamellen untereinander so zu koppeln, dass Querbelastungen, die auf eine Lamelle ausgeübt werden, von allen Lamellen gleichzeitig getragen werden.

Die Wirkung der mehreren Koppelelemente, die entlang der Länge der Lamellen vorgesehen sind, kann durch folgendes Beispiel verdeutlicht werden. Würde beispielsweise die mittlere Lamelle mit einer Kraft von 20 N belastet, die senkrecht zur Ebene der Lamelle wirkt, würde diese bei typischen Werten für die Breite der Lamelle, den E-Modul des gewählten Werkstoffs, einer üblichen Dicke und einer Länge von 267 mm rund 7,7 mm durchgebogen werden. Es ist kaum möglich, diese Durchbiegung allein durch konstruktive Änderungen der Lamelle an sich zu verringern, da andere Abmessungen der Lamelle aus konstruktiven Gründen kaum zu verwirklichen sind. Eine breitere Lamelle würde dazu führen, dass beim Verschwenken ein größerer Hub des hinteren Randes der Lamelle möglich sein müsste. Eine dickere Lamelle führt zu einer Verringerung des freien Ausströmquerschnitts. Außerdem würden sich Probleme beim Spritzgießen ergeben. Auch ist es kaum möglich, Werkstoffe mit einem höheren E-Modul einzusetzen, da bereits bei herkömmlichen Lamellen Werkstoffe mit einem sehr hohen E-Modul eingesetzt werden, insbesondere glasfaserverstärkte Werkstoffe.

Aufgrund der Koppelelemente wirkt der Durchbiegung der einzelnen, belasteten Lamelle nun aber die Steifigkeit des Pakets aus allen drei Lamellen entgegen, da auch die nicht belasteten Lamellen mittragen. Somit ergibt sich bei denselben Parametern eine Durchbiegung von lediglich 2,2 mm. Diese Verbesserung wird erzielt, ohne dass die Koppelelemente 18 mit anderen Bauteilen, abgesehen von den Lamellen 12, zusammenwirken müssen.

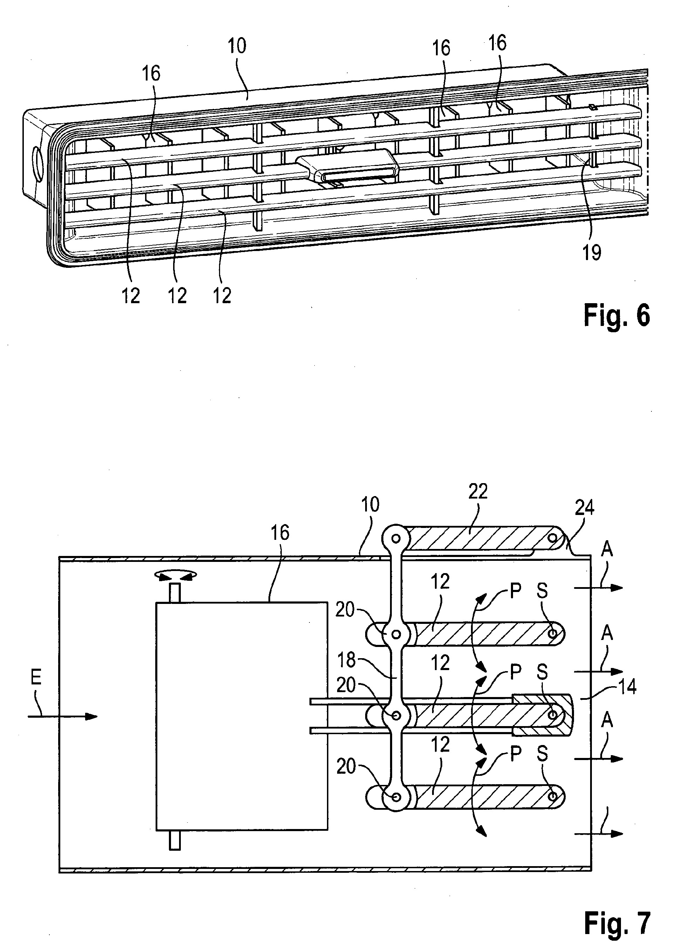

In den Figuren 5 und 6 ist ein Luftausströmer gemäß einer zweiten, nicht zur Erfindung gehörenden Ausführungsform gezeigt. Für die von der ersten, nicht zur Erfindung gehörenden Ausführungsform bekannten Bauelemente werden dieselben Bezugszeichen verwendet, und es wird insoweit auf die obigen Erläuterungen verwiesen.

Der Unterschied zwischen der ersten und der zweiten, nicht zur Erfindung gehörenden Ausführungsform besteht darin, dass die Lamellen 12 bei der zweiten, nicht zur Erfindung gehörenden Ausführungsform nicht an ihrem vorderen Rand schwenkbar gelagert sind, sondern etwa mittig. Die Koppelelemente sind bei dieser Ausführungsform durchgehende Stege, die einstückig mit dem Gehäuse 10 ausgeführt sind und sich etwa parallel zu den kürzeren Seitenrändern der Gehäuses erstrecken. Da die Schwenkachsen S, mittels denen die Lamellen 12 an den Koppelelementen 18 gelagert sind, im Abstand zur Vorderkante V angeordnet sind, weisen die Lamellen auch bei der zweiten, nicht zur Erfindung gehörenden Ausführungsform eine durchgehende Vorderkante auf, was optisch vorteilhaft ist.

Um die Schwenkbewegung der mittleren, mit dem Bedienelement 14 versehenen Lamelle auf die beiden außen liegenden Lamellen zu übertragen, ist ein zusätzliches Koppelelement 19 vorgesehen, das hinsichtlich seiner Ausgestaltung dem aus den Figuren 1 und 2 bekannten Koppelelement 18 entspricht, jedoch nicht oder allenfalls unwesentlich zur Versteifung des Lamellenpakets dient.

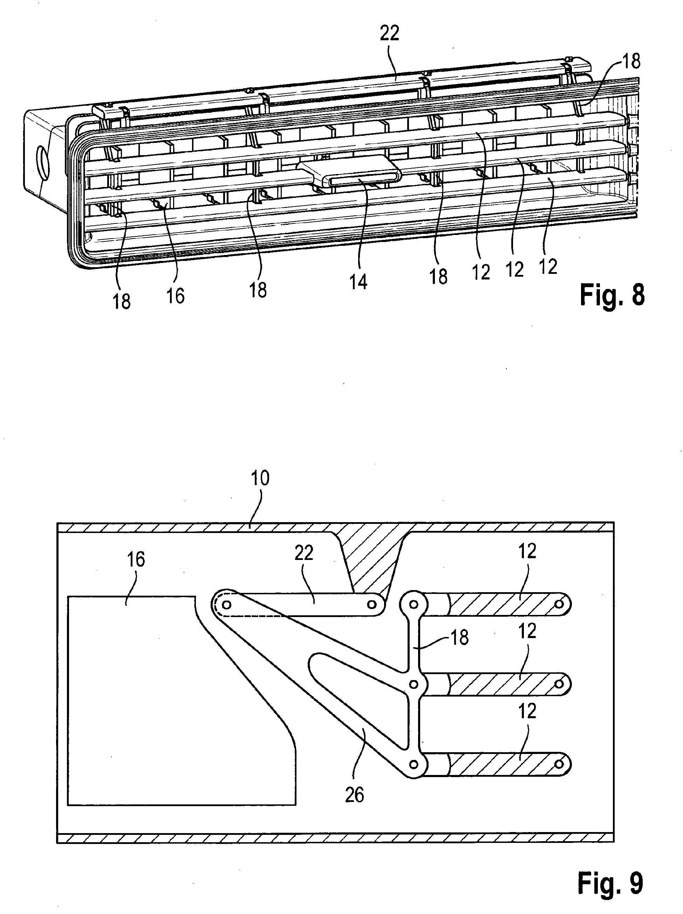

In den Figuren 7 und 8 ist eine erste Ausführungsform der Erfindung gezeigt. Für die von den vorhergehenden, nicht zur Erfindung gehörenden Ausführungsformen bekannten Bauteile werden dieselben Bezugszeichen verwendet, und es wird insoweit auf die obigen Erläuterungen verwiesen.

Die erste Ausführungsform der Erfindung basiert auf der ersten und der zweiten, nicht zur Erfindung gehörenden Ausführungsform, verwendet jedoch ein zusätzliches Verbindungselement 22, das mit dem Gehäuse durch mehrere Gehäuselager 24 schwenkbar verbunden ist. Das Verbindungselement 22 ist dabei außerhalb der Ausströmöffnung A angeordnet, hier auf der Oberseite des Gehäuses.

Die Koppelelemente 18 sind über die oberste Lamelle hinaus verlängert und erstrecken sich bis hin zum Verbindungselement 22, mit dem sie schwenkbar gekoppelt sind. Dabei ist jedem Koppelelement 18 ein Gehäuselager 24 zugeordnet. Aufgrund der Anordnung des Verbindungselements 22 außerhalb des Gehäuses und oberhalb der Lamellen können die Koppelelemente 18 im Wesentlichen geradlinig ausgeführt sein, so dass diese nicht oder nur sehr wenig auf Biegung belastet werden.

Aufgrund des Verbindungselements 22 ergibt sich eine erhebliche Versteifung des gesamten Lamellenpakets. Diese beruht auf der Kombination aus der Unterstützung durch die Gehäuselager 24 mit der Torsionsfestigkeit des Verbindungselements. Wird eine punktuelle Belastung beispielsweise der mittleren Lamelle am Bedienelement 14 angenommen, die auf die Lamelle 12 in einer Richtung senkrecht zu der von ihr definierten Ebene wirkt, kann sich eine Durchbiegung nur ergeben, wenn (aufgrund der Koppelelemente 18, die beiderseits des Bedienelements 14 angeordnet sind) das gesamte Lamellenpaket mit allen drei Lamellen durchgebogen wird. Weiterhin sind die beiden Koppelelemente 18, die beiderseits des Bedienelements 14 angeordnet sind, mit dem Verbindungselement 22 verbunden, das wiederum an den Gehäuselagern 24 abgestützt ist. Wenn die beiderseits des Bedienelements 14 angeordneten Koppelelemente sich aufgrund der wirkenden Belastung verschieben sollen, müsste das Verbindungselement 22 um die Gehäuselager 24 verschwenkt werden. Dies wäre aber nur dann möglich, wenn alle Koppelelemente in derselben Richtung verstellt würden. Dies ist aber nicht der Fall, da die außenliegenden Koppelelemente, selbst wenn das Lamellenpaket in der Mitte durchgebogen würde, an den Außenrändern davon nicht oder nur unmerklich beeinflusst würden; aufgrund der Lagerung im Gehäuse geben die Lamellen 12 dort kaum nach. Hieraus folgt, dass eine Schwenkbewegung des Verbindungselements 22 nur möglich wäre, wenn es in sich verdreht wird; die der Ausströmöffnung zugewandte Vorderkante des Verbindungselements 22 müsste im mittleren Bereich des Verbindungselements verschwenkt werden, während die äußeren Bereiche im Wesentlichen unverändert auf ihrem Niveau verbleiben. Es ist zu sehen, dass aufgrund der Torsionssteifigkeit des Verbindungselements 22 die Koppelelemente 18 gegeneinander verspannt werden, sodass das Lamellenpaket insgesamt versteift wird.

Bereits bei eine Dicke des Verbindungselements 22, die der Dicke der Lamellen entspricht, ist die Torsionsfestigkeit bereits so hoch, dass sich eine erhebliche Versteifung des gesamten Lamellenpakets ergibt. Bei dem oben angegebenen Beispielfall einer Belastung ergibt sich mit dem Verbindungselement 22 eine Durchbiegung von lediglich 0,6 mm. Falls diese Versteifungswirkung nicht ausreichend sein sollte, könnte das Verbindungselement 22 auch dicker ausgeführt werden; da es außerhalb der Ausströmöffnung A liegt, würde sich dies nicht nachteilig auf den Strömungsquerschnitt ausüben.

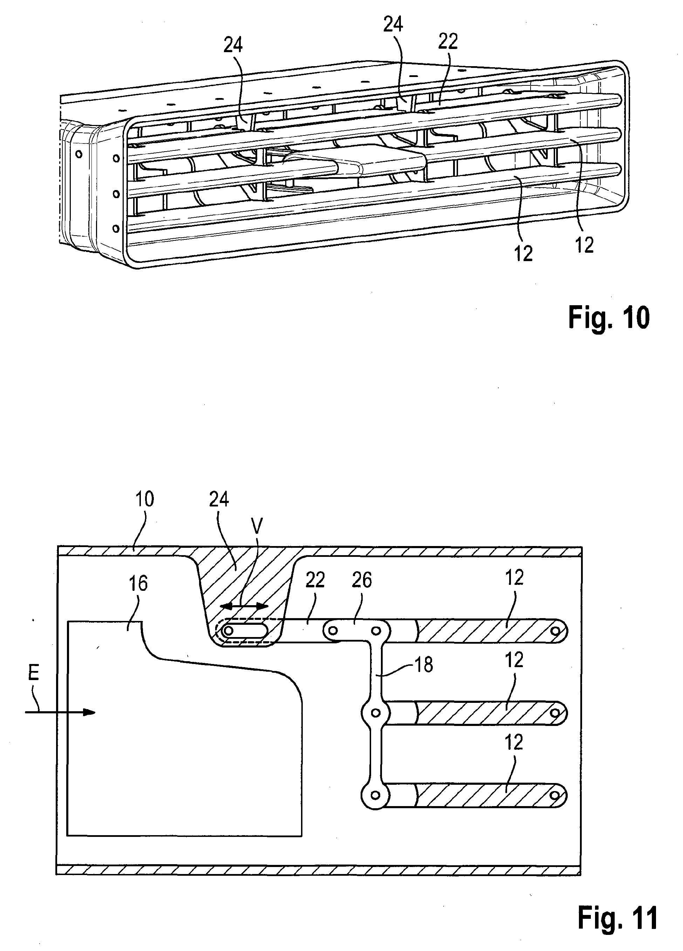

In den Figuren 10 und 11 ist eine zweite Ausführungsform der Erfindung gezeigt, die hinsichtlich ihres Prinzips auf der ersten Ausführungsform der Erfindung beruht. Der Unterschied zur ersten Ausführungsform der Erfindung besteht darin, dass das Verbindungselement 22 innerhalb des Gehäuses und, von der Ausströmöffnung aus gesehen, hinter der oberen der Lamellen 12 liegt. Die Koppelelemente 18 sind mit einem Ansatz 26 versehen, der sich von den Lamellen 12 weiter in das Innere des Gehäuses hinein erstreckt und mit dem Verbindungselement 22 verbunden ist. Da die Kinematik für die Lamellen 12 und das Verbindungselement 22 dieselbe ist, also das Koppelelement 18 an ihnen auf der Seite ihrer Schwenkachsen angreift, die von der Ausströmöffnung abgewandt ist, werden die Lamellen 12 und das Verbindungselement 22 in derselben Richtung verschwenkt.

Auch bei der zweiten Ausführungsform der Erfindung lässt sich eine erhebliche Versteifung des gesamten Lamellenpakets aufgrund der Torsionssteifigkeit des Verbindungselements 22 erzielen. Bei dem oben genannten Beispielfall ergibt sich eine Durchbiegung von 1,3 mm.

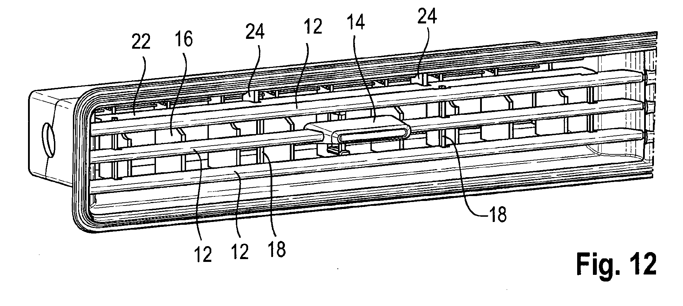

In den Figuren 11 und 12 ist eine dritte Ausführungsform der Erfindung gezeigt. Für die von den vorhergehenden Ausführungsformen bekannten Bauteile werden dieselben Bezugszeichen verwendet, und es wird insoweit auf die obigen Erläuterungen verwiesen.

Bei der dritten Ausführungsform der Erfindung ist das Verbindungselement 22 ähnlich wie bei der zweiten Ausführungsform der Erfindung innerhalb des Gehäuses und, von der Ausströmöffnung aus betrachtet, hinter der obersten Lamelle 12 angeordnet. Gegenüber der zweiten Ausführungsform der Erfindung ist für das Verbindungselement 22 jedoch die Anordnung des Gehäuselagers 24 und der Verbindung mit dem Koppelelement 18 vertauscht; bei der dritten Ausführungsform der Erfindung ist die Verbindung mit dem Koppelelement 18 näher an der Ausströmöffnung angeordnet als das Gehäuselager 24. Die Verbindung zwischen den Koppelelementen 18 und dem Verbindungselement 22 erfolgt durch kurze Ansätze 26 an den Koppelelementen. Zur Lagerung des Verbindungselements 22 am Gehäuse ist hier das Gehäuselager 24 als Schiebeführung ausgeführt, beispielsweise mittels eines Schlitzes in einem mit dem Gehäuse 10 verbundenen Materialsteg, in den ein Zapfen eingreift, der am Verbindungselement 22 vorgesehen ist. Der von der Ausströmöffnung abgewandte Rand des Verbindungselements 22 kann aufgrund der Schiebelagerung zusätzlich zu einer Schwenkbewegung eine Verschiebebewegung in der Richtung des Pfeils V von Figur 11 ausführen.

Wie in Figur 12 zu sehen ist, sind die Gehäuselager 24 auch bei der dritten Ausführungsform der Erfindung den Koppelelementen 18 zugeordnet. Somit erfolgt eine Abstützung des Verbindungselements 22 in unmittelbarer Nähe zu den Koppelelementen 18, welche die Gesamtbelastung der Lamellen in das Verbindungselement 22 einbringen.

Auch bei der dritten Ausführungsform der Erfindung ergibt sich aufgrund des Verbindungselements 22 eine erhebliche Versteifung des gesamten Lamellenpakets. Bei dem oben genannten Beispielfall ergibt sich bei der dritten Ausführungsform der Erfindung eine Durchbiegung von 1,8 mm.

## Patentansprüche

1. Luftausströmer (7) mit einem Gehäuse (10), das eine Ausströmöffnung (A) aufweist, und mit mehreren Lamellen (12), die der Ausströmöffnung (A) des Gehäuses (10) zugeordnet und schwenkbar gelagert sind, wobei die Lamellen (12) miteinander gekoppelt sind, wobei Koppelelemente (18) vorgesehen sind, welche die Lamellen (12) miteinander koppeln und entlang den Lamellen (12) im Abstand voneinander und im Abstand von der Vorderkante (V) der Lamellen (12) angeordnet sind, wobei die Lamellen (12) eine Schwenkachse (S) aufweisen, die in der Nähe ihrer Vorderkanten (V) angeordnet ist, und wobei die Koppelelemente (18) im Abstand von der Schwenkachse (S) mit den Lamellen (12) verbunden sind, **dadurch gekennzeichnet, dass** mindestens drei Koppelelemente (18) vorgesehen sind, und dass ein Verbindungselement (22) vorgesehen ist, das schwenkbar am Gehäuse (10) gelagert ist und mit dem die Koppelelemente (18) verbunden sind.

2. Luftausströmer nach Anspruch 1, **dadurch gekennzeichnet, dass** mindestens vier Koppelelemente (18) vorgesehen sind.

3. Luftausströmer nach Anspruch 1 oder Anspruch 2, **dadurch gekennzeichnet, dass** die Lamellen (12) auf der von der Innenseite des Gehäuses (10) abgewandten Seite eine durchgehenden Vorderkante (V) aufweisen.

4. Luftausströmer nach einem der vorhergehenden Ansprüche, **dadurch gekennzeichnet, dass** die Koppelelemente (18) nur mit den Lamellen (12) gekoppelt sind.

5. Luftausströmer nach einem der vorhergehenden Ansprüche, **dadurch gekennzeichnet, dass** das Verbindungselement (22) mittels mehrerer Gehäuselager (24) am Gehäuse (10) gelagert ist und dass die Gehäuselager (24) in der Nähe der Verbindung der Koppelelemente (18) mit dem Verbindungselement (22) angeordnet sind.

6. Luftausströmer nach einem der vorhergehenden Ansprüche, **dadurch gekennzeichnet, dass** das Verbindungselement (22) außerhalb der Ausströmöffnung (A) angeordnet ist.

7. Luftausströmer nach Anspruch 6, **dadurch gekennzeichnet, dass** das Verbindungselement (22) in derselben Ebene wie die Lamellen (12) angeordnet ist.

8. Luftausströmer nach einem der vorhergehenden Ansprüche, **dadurch gekennzeichnet, dass** das Verbindungselement (22) innerhalb des Gehäuses (10) angeordnet ist.

9. Luftausströmer nach Anspruch 8, **dadurch gekennzeichnet, dass** die Koppelelemente (18) mit dem Verbindungselement (22) auf dessen von der Ausströmöffnung (A) abgewandten Seite gekoppelt sind.

10. Luftausströmer nach Anspruch 8, **dadurch gekennzeichnet, dass** die Koppelelemente (18) mit dem Verbindungselement (22) auf dessen der Ausströmöffnung (A) zugewandten Seite gekoppelt sind.

11. Luftausströmer nach Anspruch 10, **dadurch gekennzeichnet, dass** das Verbindungselement (22) mit einer der Lamellen durch einen Ansatz (26) an den Koppelelementen (18) verbunden ist.

12. Luftausströmer nach einem der Ansprüche 8 bis 11, **dadurch gekennzeichnet, dass** das Verbindungselement (22) als Zusatzlamelle ausgeführt ist.

13. Luftausströmer nach einem der vorhergehenden Ansprüche, **dadurch gekennzeichnet, dass** die Lamellen (12) eine Länge von mehr als 150 mm haben, insbesondere von mehr als 200 mm und besonders bevorzugt mehr als 250 mm.

## Claims

1. An air vent (7) comprising a housing (10) which includes an outflow opening (A), and a plurality of vanes (12) which are associated with the outflow opening (A) of the housing (10) and are swivel-mounted, the vanes (12) being coupled to each other, coupling members (18) being provided which couple the vanes (12) to each other and are arranged at a distance from each other along the vanes (12) and at a distance from the front edge (V) of the vanes (12), the vanes (12) having a swivel axis (S) arranged near their front edges (V), and the coupling members (18) being connected with the vanes (12) at a distance from the swivel axis (S), **characterized in that** at least three coupling members (18) are provided, and that a connecting member (22) is provided which is swivel-mounted at the housing (10) and with which the coupling members (18) are connected.

2. The air vent according to claim 1, **characterized in that** at least four coupling members (18) are provided.

3. The air vent according to claim 1 or claim 2, **characterized in that** the vanes (12) have a continuous front edge (V) on the side facing away from the inside of the housing (10).

4. The air vent according to any of the preceding claims, **characterized in that** the coupling members (18) are only coupled to the vanes (12).

5. The air vent according to any of the preceding claims, **characterized in that** the connecting member (22) is mounted at the housing (10) by means of a plurality of housing bearings (24), and that the housing bearings (24) are arranged near the connection of the coupling members (18) with the connecting member (22).

6. The air vent according to any of the preceding claims, **characterized in that** the connecting member (22) is arranged outside of the outflow opening (A).

7. The air vent according to claim 6, **characterized in that** the connecting member (22) is arranged in the same plane as the vanes (12).

8. The air vent according to any of the preceding claims, **characterized in that** the connecting member (22) is arranged inside the housing (10).

9. The air vent according to claim 8, **characterized in that** the coupling members (18) are coupled to the connecting member (22) on the side thereof facing away from the outflow opening (A).

10. The air vent according to claim 8, **characterized in that** the coupling members (18) are coupled to the connecting member (22) on the side thereof facing the outflow opening (A).

11. The air vent according to claim 10, **characterized in that** the connecting member (22) is connected with one of the vanes by an extension (26) on the coupling members (18).

12. The air vent according to any of claims 8 to 11, **characterized in that** the connecting member (22) is in the form of an additional vane.

13. The air vent according to any of the preceding claims, **characterized in that** the vanes (12) have a length of more than 150 mm, in particular of more than 200 mm and particularly preferably of more than 250 mm.

## Revendications

1. Diffuseur d'air (7), comportant un boîtier (10) qui présente une ouverture de diffusion (1), et plusieurs lamelles (12) associées à l'ouverture de diffusion (A) du boîtier (10) et montées en basculement, les lamelles (12) étant couplées les unes aux autres, des éléments de couplage (18) étant prévus qui couplent les lamelles les unes aux autres et qui sont agencés le long des lamelles (12) à distance les uns des autres et à distance du bord avant (V) des lamelles (12), les lamelles (12) présentant un axe de basculement (S) qui est disposé à proximité de leurs bords avants (V), et les éléments de couplage (18) étant reliés aux lamelles (12) à distance de l'axe de basculement (S), **caractérisé en ce qu'**il est prévu au moins trois éléments de couplage (18) et **en ce qu'**il est prévu un élément de liaison (22) qui est monté en basculement sur le boîtier (10) et auquel sont reliés les éléments de couplage (18).

2. Diffuseur d'air selon la revendication 1, **caractérisé en ce qu'**il est prévu au moins quatre éléments de couplage (18).

3. Diffuseur d'air selon la revendication 1 ou la revendication 2, **caractérisé en ce que** les lamelles (12) présentent un bord avant (V) continu sur la face détournée du côté intérieur du boîtier (10).

4. Diffuseur d'air selon l'une des revendications précédentes, **caractérisé en ce que** les éléments de couplage (18) ne sont couplés qu'aux lamelles (12).

5. Diffuseur d'air selon l'une des revendications précédentes, **caractérisé en ce que** l'élément de liaison (22) est monté sur le boîtier (10) au moyen de plusieurs paliers de boîtier (24) et **en ce que** les paliers de boîtier (24) sont agencés à proximité de la liaison des éléments de couplage (18) à l'élément de liaison (22).

6. Diffuseur d'air selon l'une des revendications précédentes, **caractérisé en ce que** l'élément de liaison (22) est agencé à l'extérieur de l'ouverture de diffusion (A).

7. Diffuseur d'air selon la revendication 6, **caractérisé en ce que** l'élément de liaison (22) est agencé dans le même plan que les lamelles (12).

8. Diffuseur d'air selon l'une des revendications précédentes, **caractérisé en ce que** l'élément de liaison (22) est agencé à l'intérieur du boîtier (10).

9. Diffuseur d'air selon la revendication 8, **caractérisé en ce que** les éléments de couplage (18) sont couplés à l'élément de liaison (22) sur son côté détourné de l'ouverture de diffusion (A).

10. Diffuseur d'air selon la revendication 8, **caractérisé en ce que** les éléments de couplage (18) sont couplés à l'élément de liaison (22) sur son côté tourné vers l'ouverture de diffusion (A).

11. Diffuseur d'air selon la revendication 10, **caractérisé en ce que** l'élément de liaison (22) est relié à l'une des lamelles par un épaulement (26) sur les éléments de couplage (18).

12. Diffuseur d'air selon l'une des revendications 8 à 11, **caractérisé en ce que** l'élément de liaison (22) est réalisé sous forme de lamelle supplémentaire.

13. Diffuseur d'air selon l'une des revendications précédentes, **caractérisé en ce que** les lamelles (12) présentent une longueur de plus de 150 mm, en particulier de plus de 200 mm et de manière particulièrement préférée de plus de 250 mm.
